# EUROPÄISCHE PATENTANMELDUNG

(11) **EP 2 908 503 A1**
(43) Veröffentlichungstag der Anmeldung: **19.08.2015**
(21) Anmeldenummer: 14154902.2
(22) Anmeldetag: 12.02.2014
(51) Int. Cl.: H04L 29/12

(54) **Verfahren zur Konfiguration eines Telekommunikationsnetzwerkes**

(71) Anmelder: Deutsche Telekom AG, 53113 Bonn (DE)
(72) Erfinder: Scherer, Christoph, 64625 Bensheim (DE)
(74) Vertreter: Schwöbel, Thilo K.

(57) **Zusammenfassung**

Es wird ein Verfahren zur Konfiguration eines Telekommunikationsnetzwerkes vorgeschlagen, wobei das Telekommunikationsnetzwerk ein erstes Netzelement mit einem erste Port und ein zweites Netzelement mit einem zweiten Port umfasst, wobei der erste Port des ersten Netzelements mit dem zweiten Port des zweiten Netzelements verbunden ist, wobei das Verfahren folgende Verfahrensschritte umfasst:
- Generieren einer ersten Identifikationsinformation zur Identifikation des ersten Netzelements und einer ersten Netzelementinformation mit Bezug zum ersten Port des ersten Netzelements,
- Speichern der ersten Identifikationsinformation und der ersten Netzelementinformation in dem ersten Netzelement
- Generieren einer zweiten Identifikationsinformation zur Identifikation des zweiten Netzelements und einer zweiten Netzelementinformation mit Bezug zum zweiten Port des zweiten Netzelements, wobei die zweite Identifikationsinformation derart konfiguriert wird, dass in Abhängigkeit der zweiten Identifikationsinformation mit der zweiten Netzelementinformation eine Referenzinformation derart ableitbar ist, dass die Referenzinformation eine Referenz auf die Konnektivität des zweiten Netzelements zum ersten Netzelement umfasst,
- Speichern der zweiten Identifikationsinformation und der zweiten Netzelementinformation in dem zweiten Netzelement.

## Beschreibung

### Stand der Technik

Die Erfindung betrifft ein Verfahren zur Konfiguration eines Telekommunikationsnetzwerks.

Für die Konfiguration eines Telekommunikationsnetzwerkes erfolgt beispielsweise durch Netzwerkimplementierungsverfahren (Deployments), wobei Informationen bezüglich einer Konfiguration des Telekommunikationsnetzwerkes in einer Inventardatenbank abgelegt werden. Änderungen in der Struktur des Telekommunikationsnetzwerkes führen zu inkonsistenten (bzw. fehlerhaften) Datenbankeinträgen, die durch einen Soll-Ist-Vergleich zwischen einer gespeicherten Netzwerkstrukturinformation und tatsächlicher Netzwerkstruktur behoben (bzw. korrigiert) werden können. Um dies zu erreichen, ist jedoch ein vergleichsweise hoher Aufwand erforderlich. Zudem können solche Konfigurationsfehler - d.h. insbesondere inkonsistente Datenbankeinträge - erst im Nachhinein (beispielsweise mit einer zeitlichen Verzögerung von mehreren Stunden oder Tagen) erkannt werden.

### Offenbarung der Erfindung

Der Erfindung liegt die Aufgabe zugrunde, ein verbessertes Verfahren zur Konfiguration eines Telekommunikationsnetzwerkes anzugeben, wobei auf Inkonsistenzen zwischen gespeicherter Netzwerkstrukturinformation und tatsächlicher Netzwerkstruktur vergleichsweise zuverlässig und schnell reagiert werden kann.

Diese Aufgabe wird erfindungsgemäß durch ein Verfahren zur Konfiguration eines Telekommunikationsnetzwerkes gelöst, wobei das Telekommunikationsnetzwerk ein erstes Netzelement mit einem erste Port und ein zweites Netzelement mit einem zweiten Port umfasst, wobei der erste Port des ersten Netzelements mit dem zweiten Port des zweiten Netzelements verbunden ist, wobei das Verfahren folgende Verfahrensschritte umfasst:
-- Generieren einer ersten Identifikationsinformation zur Identifikation des ersten Netzelements und einer ersten Netzelementinformation mit Bezug zum ersten Port des ersten Netzelements,
-- Speichern der ersten Identifikationsinformation und der ersten Netzelementinformation in dem ersten Netzelement
-- Generieren einer zweiten Identifikationsinformation zur Identifikation des zweiten Netzelements und einer zweiten Netzelementinformation mit Bezug zum zweiten Port des zweiten Netzelements, wobei die zweite Identifikationsinformation derart konfiguriert wird, dass in Abhängigkeit der zweiten Identifikationsinformation mit der zweiten Netzelementinformation eine Referenzinformation derart ableitbar ist, dass die Referenzinformation eine Referenz auf die Konnektivität des zweiten Netzelements zum ersten Netzelement umfasst,
-- Speichern der zweiten Identifikationsinformation und der zweiten Netzelementinformation in dem zweiten Netzelement.

Es ist hierdurch erfindungsgemäß besonders vorteilhaft möglich, dass durch eine schemagetriebene Netzbewirtschaftung - d.h. einer Konfiguration des Telekommunikationsnetzwerkes in Abhängigkeit eines oder mehreren definierten Schemata bzw. Gleichungen - die Inventardatenbanken durch die Schemata bzw. Gleichungen ersetzt werden. Dadurch wird eine im Telekommunikationsnetzwerk gespeicherte und gemäß dem definierten Schema generierte Netzwerkstrukturinformation (Netzwerkstrukturschemainformation) - insbesondere im Gegensatz zu den Inventardatenbanken - vergleichsweise schnell und mit geringerem Aufwand konsistent gehalten. Insbesondere wird in Abhängigkeit der Netzwerkstrukturschemainformation die erste und/oder zweite Identifikationsinformation (beispielsweise ein erster bzw. zweiter Hostname) des ersten bzw. zweiten Netzelement derart konfiguriert (und vergeben), dass durch Kombination der zweiten Identifikationsinformation mit der zweiten Netzelementinformation (d.h. technischen Informationen des zweiten Netzelements) die Referenzinformation ableitbar (generierbar) ist. Insbesondere ist die Referenzinformation derart konfiguriert, dass mittels der Referenzinformation auf die Konnektivität des zweiten Netzelements zum (topologisch nächsthöheren) ersten Netzelement (insbesondere auf den mit dem zweiten Port des zweiten Netzelements verbundenen ersten Port des ersten Netzelements) referenziert werden wird. In einem Netzmanagementverfahren (vorzugsweise einem inband Netzmanagement) wird insbesondere die (tatsächliche) Netzwerkstruktur (bzw. der Aufbau des Telekommunikationsnetzwerkes oder die Netzwerktopologie) gegen die Netzwerkstrukturschemainformation (d.h. der in Abhängigkeit des definierten Schemas generierten Netzwerkstrukturinformation) abgeglichen. Bevorzugt weist das Telekommunikationsnetzwerk ein Netzwerkkonfigurationssystem (bzw. eine Kontrollinstanz) zur Internet Protokoll (IP-)Adressvergabe auf, wobei das Netzwerkkonfigurationssystem insbesondere derart konfiguriert ist, dass die definierte Netzwerkstrukturschemainformation durch das Netzwerkkonfigurationssystem ausgewertet wird und/oder Inkonsistenzen erkannt (d.h. detektiert und/oder identifiziert) werden. Vorzugsweise wird eine Reaktionsmaßnahme (in Echtzeit) durchgeführt (d.h. es wird auf die Inkonsistenz reagiert). Beispielsweise umfasst die Reaktionsmaßnahme bzw. das Reagieren:
-- Speichern und/oder Anzeigen einer Information bezüglich eines Fehlerzustands und/oder
-- Beheben (d.h. Korrigieren) der Inkonsistenzen und/oder
-- Speichern und/oder Anzeigen eines Bearbeitungszustands.

Erfindungsgemäß ist es bevorzugt, das Verfahren ferner folgenden Verfahrensschritt umfasst:
-- Generieren der zweiten Identifikationsinformation durch Kombination der ersten Identifikationsinformation mit der ersten Netzelementinformation,
-- Generieren der Referenzinformation durch Kombination der zweiten Identifikationsinformation mit der zweiten Netzelementinformation, sodass die Referenzinformation eine Referenz auf die Konnektivität des zweiten Netzelements zum ersten Netzelement umfasst.

Es ist hierdurch erfindungsgemäß besonders vorteilhaft möglich, dass mit der Referenzinformation auf die Konnektivität des zweiten Netzelements zum ersten Netzelement referenziert wird. Das bedeutet insbesondere, dass die Referenzinformation eine Referenz auf den (physikalischen oder logischen) ersten Port des ersten Netzelements umfasst, der mit dem zweiten (physikalischen oder logischen) Port des zweiten Netzelements (physikalisch oder logisch) verbunden ist. Bevorzugt umfasst das zweite Netzelement eine Mehrzahl von zweiten Ports, wobei demjenigen zweiten Port der Mehrzahl von zweiten Ports, der mit dem ersten Port des ersten Netzelements verbunden ist, die Referenzinformation (eindeutig) zugeordnet wird.

Erfindungsgemäß bevorzugt ist es weiterhin, das Verfahren ferner folgenden Verfahrensschritt umfasst:
-- Anfrage, bei dem Telekommunikationsnetzwerk, einer Internetprotokolladresse zur Realisierung einer Internetprotokollverbindung,
-- Prüfen, durch das Telekommunikationsnetzwerk, ob die Referenzinformation bei der Anfrage der Internetprotokolladresse über den ersten Port des ersten Netzelements geführt wurde.

Es ist hierdurch erfindungsgemäß besonders vorteilhaft möglich, dass die Prüfung auf Inkonsistenzen zwischen Referenzinformation und (tatsächlicher) Netzwerkstruktur bei der Anfrage nach der Internetprotokolladresse (d.h. während des Übertragens einer Anfragenachricht an das Telekommunikationsnetz) erfolgt.

Erfindungsgemäß bevorzugt ist es weiterhin, dass
-- eine Internetprotokolladresse für die Internetprotokollverbindung vergeben wird, wenn durch das Telekommunikationsnetzwerk detektiert wird, dass die Referenzinformation während der Anfrage der Internetprotokolladresse für die Realisierung der Internetprotokollverbindung über den ersten Port des ersten Netzelements geführt wurde und/oder
-- ein Fehlerinformationselement erzeugt wird, wenn durch das Telekommunikationsnetzwerk detektiert wird, dass die Referenzinformation und der erste Port des ersten Netzelements zusammenhanglos sind, wobei insbesondere die Internetprotokollverbindung gemäß einer eingeschränkten Konnektivitätsstufe hergestellt wird.

Es ist hierdurch erfindungsgemäß besonders vorteilhaft möglich, dass eine Echtzeitreaktion auf eventuelle Fehler des Deployments des Telekommunikationsnetzwerkes ermöglicht wird, wobei Inkonsistenzen zwischen der tatsächlichen Netzwerkstruktur und der Netzwerkstrukturschemainformation automatisch (durch das Telekommunikationsnetzwerk) (in Abhängigkeit des Fehlerinformationselements) bereinigt werden können. Insbesondere bedeutet eingeschränkte Konnektivitätsstufe, dass die die Internetprotokollverbindung hinsichtlich der Nutzungsberechtigung bzw. Nutzbarkeit (potentiell) eingeschränkt ist. Beispielsweise ist die IP Verbindung zugangsbeschränkt, d.h. der Adressraum bezüglich (potentiell) erreichbarer IP Adressen (relativ zu dem Fall, dass die Anfrage über den ersten Port geführt wurde) eingeschränkt.

Erfindungsgemäß bevorzugt ist es weiterhin, das Telekommunikationsnetzwerk ein Netzwerkkonfigurationssystem aufweist, wobei das Verfahren ferner folgende Verfahrensschritte umfasst:
-- Übertragen einer Anfrageinformation von einem Anfragegerät an das Telekommunikationsnetzwerk, wobei sich die Anfrageinformation auf die Anfrage der Internetprotokolladresse für die Realisierung der Internetprotokollverbindung zwischen dem Telekommunikationsnetzwerk und dem Anfragegerät bezieht, wobei die Anfrageinformation über das zweite Netzelement an das Telekommunikationsnetzwerk gesendet wird,
-- Übertragen der Referenzinformation und der Anfrageinformation von dem zweiten Netzelement an das Netzwerkkonfigurationssystem.

Es ist hierdurch erfindungsgemäß besonders vorteilhaft möglich, dass während der Anfrage - d.h. beispielsweise während eines Dynamic Host Configuration Protocol (DHCP, DHCPv6) Requests oder Point-to-Point Protocol (PPP) Requests - durch Auswerten der Netzwerkstrukturschemainformation Inkonsistenzen erkannt werden und insbesondere in Echtzeit auf die Inkonsistenzen reagiert wird. Bevorzugt erfolgt die Auswertung in Abhängigkeit der Fehlerinformation, wobei die Fehlerinformation insbesondere durch Abgleich der Referenzinformation mit der tatsächlichen Netzwerkstruktur erzeugt wird. Insbesondere werden die Referenzinformation und die Anfrageinformation an das Netzwerkkonfigurationssystem in derselben Anfragenachricht (DHCP Request oder PPP Request) übertragen.

Erfindungsgemäß bevorzugt ist es weiterhin, dass das Telekommunikationsnetzwerk ein Netzwerkmanagementsystem aufweist, wobei das Verfahren ferner folgende Verfahrensschritte umfasst:
-- Übertragen des Fehlerinformationselements an das Netzwerkmanagementsystem,
-- Abgleich, durch das Netzwerkmanagementsystem, einer Netzwerkstrukturschemainformation mit einer Netzwerkstruktur des Telekommunikationsnetzwerks, wobei der Abgleich insbesondere in Abhängigkeit des Fehlerinformationselements und/oder der Referenzinformation durchgeführt wird, wobei der Abgleich insbesondere in einem In-band Netzwerkmanagementverfahren durchgeführt wird.

Es ist hierdurch erfindungsgemäß besonders vorteilhaft möglich, dass durch das Netzwerkmanagementsystem eine konsistente Konfiguration des Telekommunikationsnetzwerkes ermöglicht wird und/oder auf Inkonsistenzen vergleichsweise schnell reagiert wird.

Erfindungsgemäß bevorzugt ist es weiterhin, dass in Abhängigkeit des Fehlerinformationselements Inkonsistenzen zwischen der Netzwerkstrukturschemainformation und der Netzwerkstruktur des Telekommunikationsnetzwerkes erkannt werden und insbesondere in Echtzeit auf die Inkonsistenzen reagiert wird.

Es ist hierdurch erfindungsgemäß besonders vorteilhaft möglich, dass Änderungen in der tatsächlichen Netzwerkstruktur des Telekommunikationsnetzwerkes vergleichsweise schnell erkannt werden und auf daraus resultierende Inkonsistenzen des Deployments des Telekommunikationsnetzwerkes reagiert werden kann. Hierbei bedeutet Echtzeit ein Zeitraum von insbesondere weniger als 1000 Sekunden (s), bevorzugt weniger als 100 s, besonders bevorzugt weniger als 10 s, ganz besonders bevorzugt weniger als 1 s. Alternativ oder zusätzlich bedeutet Echtzeit hier insbesondere, dass die Reaktionsmaßnahme innerhalb einer transaktionalen Abfolge initiiert und/oder ausgeführt wird, wobei sich der Begriff "transaktionale Abfolge" insbesondere auf ein synchrones Erkennen und Reagieren auf die Inkonsistenzen während der Vergabe der IP-Adresse für die IP-Verbindung bezieht (d.h. das Erkennen und die Reaktion auf die Inkonsistenz bei einer IP-Vergabe erfolgen im Wesentlichen gleichzeitig).

Ein weiterer Gegenstand der vorliegenden Erfindung ist ein Telekommunikationsnetzwerk mit einem ersten Netzelement und einem zweiten Netzelement, wobei das erste Netzelement einen ersten Port und das zweite Netzelement einen zweiten Port aufweist, wobei der erste Port des ersten Netzelements mit dem zweiten Port des zweiten Netzelements verbunden ist, wobei das Telekommunikationsnetzwerk zum Generieren einer ersten Identifikationsinformation zur Identifikation des ersten Netzelements und einer ersten Netzelementinformation mit Bezug zum ersten Port des ersten Netzelements konfiguriert ist, wobei das Telekommunikationsnetzwerk zum Speichern der ersten Identifikationsinformation und der ersten Netzelementinformation in dem ersten Netzelement konfiguriert ist, wobei das Telekommunikationsnetzwerk zum Generieren einer zweiten Identifikationsinformation zur Identifikation des zweiten Netzelements und einer zweiten Netzelementinformation mit Bezug zum zweiten Port des zweiten Netzelements konfiguriert ist, wobei die zweite Identifikationsinformation derart konfiguriert ist, dass durch Kombination der zweiten Identifikationsinformation mit der zweiten Netzelementinformation eine Referenzinformation derart ableitbar ist, dass die Referenzinformation eine Referenz auf die Konnektivität des zweiten Netzelements zum ersten Netzelement umfasst, wobei das Telekommunikationsnetzwerk zum Speichern der zweiten Identifikationsinformation und der zweiten Netzelementinformation in dem zweiten Netzelement.

Es ist hierdurch erfindungsgemäß besonders vorteilhaft möglich, dass ein Telekommunikationsnetzwerk bereitgestellt wird, welches unter vergleichsweise geringem Aufwand - insbesondere im Hinblick auf das Deployment des Telekommunikationsnetzwerkes - stets auf aktuellem Stand gehalten werden kann. Insbesondere werden dabei durch eine schemagetriebene Netzbewirtschaftung die Inventardatenbanken durch Schemata bzw. Gleichungen (Netzwerkstrukturschemainformation) ersetzt, sodass die im Telekommunikationsnetzwerk gespeicherte Netzwerkstrukturschemainformation (im Gegensatz zu den Inventardatenbanken) und die tatsächliche Netzwerkstruktur des Telekommunikationsnetzwerkes konsistent sind. Bevorzugt weist das Telekommunikationsnetzwerk ein Netzwerkkonfigurationssystem - welches hier auch als Kontrollinstanz bezeichnet wird - zur Internet Protokoll (IP-)Adressvergabe auf, das insbesondere derart konfiguriert ist, dass die definierte Netzwerkstrukturschemainformation durch das Netzwerkkonfigurationssystem ausgewertet werden und/oder Inkonsistenzen erkannt werden und/oder auf Inkonsistenzen in Echtzeit reagiert wird (und dabei beispielsweise behoben werden)..

Ferner ist es - insbesondere im Hinblick auf das Telekommunikationsnetzwerk - erfindungsgemäß bevorzugt, dass das Telekommunikationsnetzwerk derart konfiguriert ist, dass durch das Telekommunikationsnetzwerk ein Prüfungsschritt durchgeführt wird, wenn eine Anfrageinformation bezüglich einer Anfrage einer Internetprotokolladresse für eine Realisierung einer Internetprotokollverbindung an das Telekommunikationsnetzwerk gesendet wird, wobei der Prüfungsschritt eine Prüfung umfasst, ob die mit der Anfrageinformation übertragene Referenzinformation über den durch die Referenzinformation referenzierten ersten Port des ersten Netzelements geführt wurde.

Ferner ist es - insbesondere im Hinblick auf das Telekommunikationsnetzwerk - erfindungsgemäß bevorzugt, dass das Telekommunikationsnetzwerk ein Netzwerkkonfigurationssystem aufweist, wobei das Netzwerkkonfigurationssystem zur Vergabe einer Internetprotokolladresse konfiguriert ist, wobei das Netzwerkkonfigurationssystem derart konfiguriert ist, dass
-- eine Internetprotokolladresse für die Internetprotokollverbindung vergeben wird, wenn die Referenzinformation während der Anfrage der Internetprotokolladresse für die Realisierung der Internetprotokollverbindung über den ersten Port des ersten Netzelements geführt wurde und/oder
-- ein Fehlerinformationselement erzeugt wird, wenn die Referenzinformation und der erste Port des ersten Netzelements zusammenhanglos sind, wobei insbesondere die Internetprotokollverbindung gemäß einer eingeschränkten Konnektivitätsstufe hergestellt wird.

Ferner ist es - insbesondere im Hinblick auf das Telekommunikationsnetzwerk - erfindungsgemäß bevorzugt, dass das Telekommunikationsnetzwerk ein Netzwerkmanagementsystem aufweist, wobei das Netzwerkmanagementsystem zum Empfang des Fehlerinformationselements von dem Netzwerkkonfigurationssystem konfiguriert ist, wobei das Netzwerkmanagementsystem eine Netzwerkstrukturschemainformation bezüglich einer Netzwerkstruktur des Telekommunikationsnetzwerkes aufweist, wobei das Netzwerkmanagementsystem zum Abgleich der Netzwerkstrukturschemainformation mit der Netzwerkstruktur des Telekommunikationsnetzwerkes konfiguriert ist, wobei das Netzwerkmanagementsystem insbesondere zum Abgleich in Abhängigkeit des Fehlerinformationselements und/oder der Referenzinformation konfiguriert ist, wobei das Netzwerkmanagementsystem insbesondere zum Abgleich mittels eines In-band Netzwerkmanagementverfahrens konfiguriert ist.

Ferner ist es - insbesondere im Hinblick auf das Telekommunikationsnetzwerk - erfindungsgemäß bevorzugt, dass
-- der Netzwerkkonfigurationsserver einen Dynamic Host Configuration Protocol (DHCP, DHCPv6) Server oder Point-to-Point Protocol (PPP) Server umfasst und/oder
-- das Netzwerkmanagementsystem ein Betriebsunterstützungssystem (OSS) ist und/oder
-- das erste Netzelement ein Zugangsknoten, Switch oder Router ist und/oder
-- das zweite Netzelement ein Zugangsknoten des Telekommunikationsnetzwerkes, ein Switch oder Router ist.

Es ist hierdurch erfindungsgemäß besonders vorteilhaft möglich, dass eine Integration von DHCP- oder PPP Servern in das Netzwerkmanagement erfolgt. Insbesondere wird der Zugangsknoten auch als Access Node bezeichnet.

Ferner ist es - insbesondere im Hinblick auf die Vermittlungskomponente - erfindungsgemäß bevorzugt, dass:
-- die erste Identifikationsinformation ein erster Hostname des ersten Netzelements ist und/oder
-- die erste Netzelementinformation eine erste Portidentifikationsinformation bezüglich eines physikalischen und/oder virtuellen ersten Ports des ersten Netzelements umfasst und/oder
-- die zweite Identifikationsinformation ein zweiter Hostname des zweiten Netzelements ist und/oder
-- die zweite Netzelementinformation eine zweite Portidentifikationsinformation bezüglich eines physikalischen und/oder virtuellen zweiten Ports des zweiten Netzelements umfasst und/oder
-- die Referenzinformation insbesondere ein Identifier ist.

Erfindungsgemäß bevorzugt ist die Referenzinformation insbesondere ein (logischer oder physikalischer) Identifier, mit dem eine Referenz gebildet wird oder werden kann, beispielsweise eine Leitungsidentifikationsinformation (Line-ID) und/oder Portidentifikationsinformation (Circuit-ID) und/oder eine IP-Adresse bzw. ein IP-Präfix.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf wenigstens einer programmierbaren Einrichtung eines Telekommunikationsnetzwerkes ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf wenigstens einer programmierbaren Einrichtung eines Telekommunikationsnetzwerkes ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

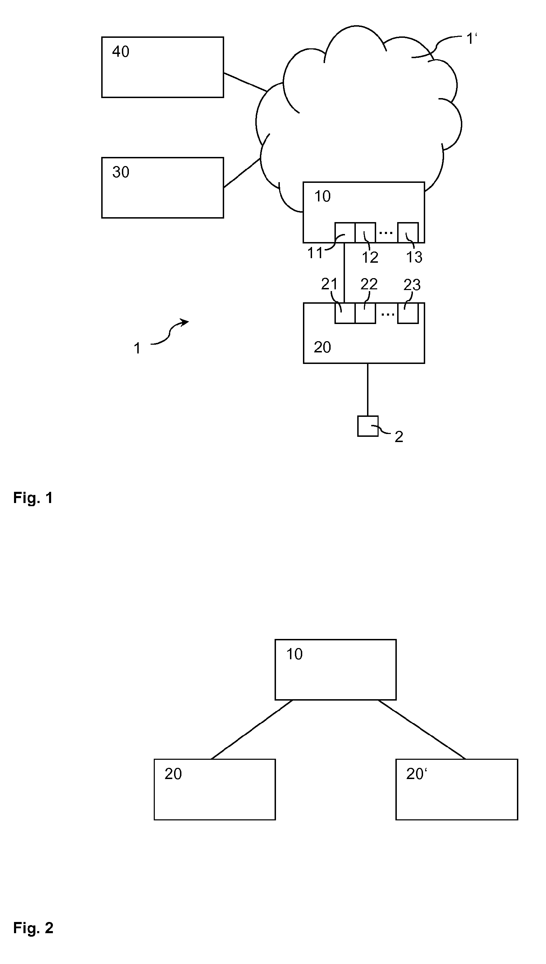

- **Figuren 1 bis 4**: zeigen schematische Ansichten eines erfindungsgemäßen Telekommunikationsnetzwerks.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist schematisch eine Ansicht eines erfindungsgemäßen Telekommunikationsnetzwerkes 1 dargestellt, wobei das Telekommunikationsnetzwerk 1 ein erstes Netzelement 10 und ein zweites Netzelement 20 aufweist.

Hier ist das erste Netzelement 10 ein Router, wobei der Router beispielsweise ein mit einem Internet Protokoll (IP-)Kernnetz 1' (Backbone-Netzwerk) des Telekommunikationsnetzwerkes assoziierter Router (insbesondere ein Breitband-Zugangsserver) oder ein anderes Netzelement ist. Hier ist das zweite Netzelement 20 ein Zugangsknoten (Access Node) des Telekommunikationsnetzwerkes 1, beispielsweise ein Digital Subscriber Line Access Multiplexer (DSLAM). Hier ist insbesondere ein Anfragegerät 2 mit dem Zugangsknoten 20 verbunden, wobei die Anfrage einer IP Adresse für die Realisierung einer Internetprotokollverbindung zwischen dem Anfragegerät 2 und dem Telekommunikationsnetzwerk 1 vom Anfragegerät 2 an das Telekommunikationsnetzwerk 1 übertragen wird. Erfindungsgemäß ist es aber auch möglich, dass das zweite Netzelement 20 ein Router ist und/oder das erste Netzelement 10 ein Zugangsknoten ist oder andere Netzelemente des Telekommunikationsnetzwerkes 1 sind.

Das erste Netzelement 10 weist eine Mehrzahl von ersten Ports 11, 12, ..., 13 (d.h. Schnittstellen) und das zweite Netzelement 20 weist eine Mehrzahl von zweiten Ports 21, 22, ..., 23 auf, wobei ein erster Port 11 der Mehrzahl von ersten Ports 11, 12, ..., 13 des ersten Netzelements 10 mit einem zweiten Port 21 der Mehrzahl von zweiten Ports 21, 22, ..., 23 des zweiten Netzelements 20 verbunden ist. Die Mehrzahl von ersten Ports 11, 12, ..., 13 und zweiten Ports 21, 22, ..., 23 sind jeweils physikalische Ports oder logische Ports, wobei die logischen Ports beispielsweise durch logische Teilnetze (beispielsweise Virtual Local Area Networks - VLANs) gebildet werden.

Das Telekommunikationsnetzwerk 1 ist zum Generieren einer ersten Identifikationsinformation zur Identifikation des ersten Netzelements 10 konfiguriert. Bevorzugt umfasst das erste Telekommunikationsnetz 1 eine Vielzahl von ersten Netzelementen 10, insbesondere Routern, welche gemäß einem Schema - d.h. insbesondere gemäß einer in dem Telekommunikationsnetzwerk 1 gespeicherten (definierten) Netzwerkstrukturschemainformation - benannt werden.

Eine exemplarische Benennung der Router erfolgt beispielsweise gemäß folgendem Schema:
[AB] [BC] [CD] [DE] [EF] [GH] [...] [ZA].

Hierbei wird beispielsweise definiert, dass der Router 10 mit dem Namen [AB] mit einem weiteren Router mit dem Namen [BC] verbunden ist, der weitere Router mit dem Namen [BC] mit noch einem weiteren Router mit dem Namen [CD] verbunden ist usw. Auf diese Weise wird im Schema insbesondere die Topologie des Telekommunikationsnetzwerkes 1 abgebildet. Insbesondere wird ein Verfahren zur Topologie-Erkennung eingesetzt (beispielsweise unter Verwendung sogenannter "Topology Discovery Protokolle"), wobei das Ergebnis des Verfahrens zur Topologie-Erkennung direkt mit der Netzwerkstrukturschemainformation abgeglichen wird.

Weiterhin ist das Telekommunikationsnetzwerk 1 zum Generieren einer ersten Netzelementinformation mit Bezug zum ersten Port 11 des ersten Netzelements 10 konfiguriert. Beispielsweise umfasst die erste Netzelementinformation eine erste Portidentifikationsinformation, insbesondere eine Portnummer. Das bedeutet bevorzugt, dass die Mehrzahl von (physikalischen) Ports 11, 12, ..., 13 des ersten Netzelements 10 hier (eindeutig) durchnummeriert werden (beispielsweise mit den Nummern 01-99). In analoger Weise werden bevorzugt die logischen Ports (welche beispielsweise durch VLANs gebildet werden) durchnummeriert. Bevorzugt ist das erste Netzelement 10 derart konfiguriert, dass die erste Identifikationsinformation und/oder die erste Netzelementinformation bei einer Anfrage (d.h. bei einem DHCP- oder PPP-Request) an das Telekommunikationsnetzwerk 1 (insbesondere an das Netzwerkkonfigurationssystem 30) weitergeleitet bzw. vermittelt werden (sogenannte Relay-Funktion).

Ferner wird durch das Telekommunikationsnetzwerk 1 die generiert erste Identifikationsinformation und die generierte erste Netzelementinformation dem ersten Netzelement 10 zugewiesen und in einem Speicherelement des ersten Netzelements 10 gespeichert.

Das Telekommunikationsnetzwerk 1 ist weiterhin derart konfiguriert, dass eine zweite Identifikationsinformation zur Identifikation des zweiten Netzelements 20 und einer zweiten Netzelementinformation mit Bezug zum zweiten Port 21 des zweiten Netzelements 20 generiert wird. Beispielsweise ist die zweite Identifikationsinformation ein zweiter Hostname des zweiten Netzelements. Beispielsweise umfasst die zweite Netzelementinformation eine zweite Portidentifikationsinformation, insbesondere eine Portnummer. Das bedeutet bevorzugt, dass die Mehrzahl von (physikalischen) Ports 21, 22, ..., 23 des zweiten Netzelements 20 hier (eindeutig) durchnummeriert werden. Insbesondere werden die physikalischen Ports des zweiten Netzelements durchnummeriert und beispielsweise auf die korrespondierenden VLANs 1:1 (des mit dem zweiten Port 21 verbundenen ersten Ports 11) des ersten Netzelements durch ein Schema abgebildet (d.h. zugeordnet).

Insbesondere umfasst das Telekommunikationsnetzwerk 1 eine Vielzahl von zweiten Netzelementen 20, 20'. In Figur 2 ist beispielhaft dargestellt, dass das zweite Netzelement 20 und ein weiteres zweites Netzelement 20' mit dem ersten Netzelement 10 verbunden sind.

Die zweite Identifikationsinformation ist derart konfiguriert, dass durch Kombination der zweiten Identifikationsinformation mit der zweiten Netzelementinformation eine Referenzinformation derart ableitbar ist, dass die Referenzinformation eine Referenz auf die Konnektivität des zweiten Netzelements 20 zum ersten Netzelement 10 umfasst.

Beispielsweise ist das zweite Netzelement 20 mit dem ersten Port 11 mit einer eindeutig zugeordneten ersten Portidentifikationsnummer verbunden und das weitere zweite Netzelement 20' mit einem weiteren ersten Port 12 mit einer eindeutig zugeordneten weiteren ersten Portidentifikationsnummer (beispielsweise Portnummer "02") verbunden. Bevorzugt wird hier die zweite Identifikationsinformation (beispielsweise Hostname "AB01") des zweiten Netzelements 20 (Zugangsknoten 20) durch Kombination der ersten Identifikationsinformation (Router-Name "[AB]") des ersten Netzelements 10 (Router 10) mit der Portidentifikationsnummer (Portnummer "01 ") des ersten Ports generiert. Entsprechend wird beispielsweise dem mit dem weiteren ersten Port 12 verbundenen weiteren zweiten Netzelement 20' der weitere zweite Hostname "AB02" zugewiesen.

Beispielsweise ist die Referenzinformation eine Portidentifikationsinformation (Circuit ID), die auf dem zweiten Netzelement 20 (d.h. hier auf dem Zugangsknoten 20) gespeichert und insbesondere dem zweiten Port 21 (eindeutig) zugeordnet ist. Beispielsweise wird die Circuit-ID gemäß dem folgenden Schema gebildet:
<hostname> eth <slot>/<port>:VLAN-ID.

Beispielsweise ergeben sich daraus die folgenden Circuit-IDs für die Ports 21, 22, ..., 23 des zweiten Netzelements 20:
AB01 eth 0/1:01, AB01 eth 0/1:02, ..., AB01 eth 0/1:03.

Die zweite Identifikationsinformation und die zweite Netzelementinformation werden dem zweiten Netzelement 20 zugewiesen und in einem Speicherelement des zweiten Netzelements 20 gespeichert.

Bevorzugt ist das zweite Netzelement 20 derart konfiguriert, dass die zweite Identifikationsinformation und/oder die zweite Netzelementinformation bei einer Anfrage (d.h. bei einem DHCP- oder PPP-Request) an das Telekommunikationsnetzwerk 1 (insbesondere an das Netzwerkkonfigurationssystem 30) weitergeleitet bzw. vermittelt werden (sogenannte Relay-Funktion).

Das Telekommunikationsnetzwerk 1 weist hier ein Netzwerkkonfigurationssystem 30 auf, welches beispielsweise einen DHCP-Server oder PPP-Server umfasst. Insbesondere wird bei einer Vergabe einer IP Adresse durch das Netzwerkkonfigurationssystem 30 geprüft, ob eine Circuit-ID AB01 eth 0/1:01 bei einer Anfrage der IP Adresse (d.h. bei einem PPP- oder DHCP-Request) über den ersten Port 11 (mit der Portnummer "01 ") des ersten Netzelements 10 (dem Router mit dem Namen "[AB]") geführt wurde. Sofern dies der Fall ist, wird eine IP-Adresse durch das Telekommunikationsnetzwerk vergeben. Sofern dies nicht der Fall ist, wird für den ersten Port 11 (des Routers 10) eine spezifische Fehler-Policy (Fehlerinformationselement) konfiguriert und an ein Netzwerkmanagementsystem 40 (beispielsweise ein Betriebsunterstützungssystem - OSS) des Telekommunikationsnetzwerkes 1 übermittelt und insbesondere die Internetprotokollverbindung gemäß einer eingeschränkten Konnektivitätsstufe hergestellt (z.B. walled garden).

Bevorzugt wird in Echtzeit reagiert, wobei das Reagieren wenigstens einen der folgenden Verfahrensschritte umfasst:
-- Speichern und/oder Anzeigen einer Information bezüglich eines Fehlerzustands und/oder
-- Beheben (d.h. Korrigieren) der Inkonsistenzen und/oder
-- Speichern und/oder Anzeigen eines Bearbeitungszustands, wobei beispielsweise angezeigt wird, dass ein Fehler aufgetreten und erkannt wurde und/oder an dessen Beseitigung gearbeitet wird.

Insbesondere wird die IP Verbindung gemäß der eingeschränkten Konnektivitätsstufe derart hergestellt, dass eine HTTP-Anfrage (HTTP-Request) zu einem Portal (d.h. beispielsweise eine Webseite mit Bezug zum Netzwerkmanagementsystem 40) umgeleitet wird. Hierdurch ist es vorteilhaft möglich, dass die Anzahl der Hilfsanfragen (beispielsweise Anrufe der Kunden) bei dem Betreiber des Telekommunikationsnetzwerks reduziert werden. Bevorzugt wird die IP Verbindung gemäß der eingeschränkten Konnektivitätsstufe derart konfiguriert, dass einzelne oder alle (HTTP-)Anfragen (auf das Portal) umgeleitet werden.

Diese Art der Validierung wird bevorzugt in einem IP Version 6 (IPv6)-Netzwerk durchgeführt, wenn Wide Area Network (WAN-)Präfixe und Local Area Network (LAN-)Präfixe nach unterschiedlichen Verfahren (WAN: Router Advertisement (RA) und LAN: DHCPv6 - stateless) vergeben werden und somit nicht eine Kontrollinstanz für die Vergabe von IP-Präfixen im Netzwerk existiert, wobei die Präfixe jeweils gemäß einem Schema (d.h. einer Netzwerkstrukturschemainformation) definiert bzw. generiert sind, dessen Einhaltung überprüft werden soll.

## Patentansprüche

1. Verfahren zur Konfiguration eines Telekommunikationsnetzwerkes (1), wobei das Telekommunikationsnetzwerk (1) ein erstes Netzelement (10) mit einem erste Port (11) und ein zweites Netzelement (20) mit einem zweiten Port (21) umfasst, wobei der erste Port (11) des ersten Netzelements (10) mit dem zweiten Port (21) des zweiten Netzelements (20) verbunden ist, wobei das Verfahren folgende Verfahrensschritte umfasst:
-- Generieren einer ersten Identifikationsinformation zur Identifikation des ersten Netzelements (10) und einer ersten Netzelementinformation mit Bezug zum ersten Port (11) des ersten Netzelements (10),
-- Speichern der ersten Identifikationsinformation und der ersten Netzelementinformation in dem ersten Netzelement (10)
-- Generieren einer zweiten Identifikationsinformation zur Identifikation des zweiten Netzelements (20) und einer zweiten Netzelementinformation mit Bezug zum zweiten Port (21) des zweiten Netzelements (20), wobei die zweite Identifikationsinformation derart konfiguriert wird, dass in Abhängigkeit der zweiten Identifikationsinformation mit der zweiten Netzelementinformation eine Referenzinformation derart ableitbar ist, dass die Referenzinformation eine Referenz auf die Konnektivität des zweiten Netzelements (20) zum ersten Netzelement (10) umfasst,
-- Speichern der zweiten Identifikationsinformation und der zweiten Netzelementinformation in dem zweiten Netzelement (20).

2. Verfahren nach Anspruch 1, **dadurch gekennzeichnet, dass** das Verfahren ferner folgenden Verfahrensschritt umfasst:
-- Generieren der zweiten Identifikationsinformation durch Kombination der ersten Identifikationsinformation mit der ersten Netzelementinformation,
-- Generieren der Referenzinformation durch Kombination der zweiten Identifikationsinformation mit der zweiten Netzelementinformation, sodass die Referenzinformation eine Referenz auf die Konnektivität des zweiten Netzelements (20) zum ersten Netzelement (10) umfasst.

3. Verfahren nach einem der vorhergehenden Ansprüche, **dadurch gekennzeichnet, dass** das Verfahren ferner folgenden Verfahrensschritt umfasst:
-- Anfrage, bei dem Telekommunikationsnetzwerk (1), einer Internetprotokolladresse zur Realisierung einer Internetprotokollverbindung,
-- Prüfen, durch das Telekommunikationsnetzwerk (1), ob die Referenzinformation bei der Anfrage der Internetprotokolladresse über den ersten Port (11) des ersten Netzelements (10) geführt wurde.

4. Verfahren nach einem der vorhergehenden Ansprüche, **dadurch gekennzeichnet, dass**
-- eine Internetprotokolladresse für die Internetprotokollverbindung vergeben wird, wenn durch das Telekommunikationsnetzwerk (1) detektiert wird, dass die Referenzinformation während der Anfrage der Internetprotokolladresse für die Realisierung der Internetprotokollverbindung über den ersten Port (11) des ersten Netzelements (10) geführt wurde und/oder
-- ein Fehlerinformationselement erzeugt wird, wenn durch das Telekommunikationsnetzwerk (1) detektiert wird, dass die Referenzinformation und der erste Port (11) des ersten Netzelements (10) zusammenhanglos sind, wobei insbesondere die Internetprotokollverbindung gemäß einer eingeschränkten Konnektivitätsstufe hergestellt wird.

5. Verfahren nach einem der vorhergehenden Ansprüche, **dadurch gekennzeichnet, dass** das Telekommunikationsnetzwerk (1) ein Netzwerkkonfigurationssystem (30) aufweist, wobei das Verfahren ferner folgende Verfahrensschritte umfasst:
-- Übertragen einer Anfrageinformation von einem Anfragegerät (2) an das Telekommunikationsnetzwerk (1), wobei sich die Anfrageinformation auf die Anfrage der Internetprotokolladresse für die Realisierung der Internetprotokollverbindung zwischen dem Telekommunikationsnetzwerk (1) und dem Anfragegerät (2) bezieht, wobei die Anfrageinformation über das zweite Netzelement (20) an das Telekommunikationsnetzwerk (1) gesendet wird,
-- Übertragen der Referenzinformation und der Anfrageinformation von dem zweiten Netzelement (20) an das Netzwerkkonfigurationssystem (30).

6. Verfahren nach einem der vorhergehenden Ansprüche, **dadurch gekennzeichnet, dass** das Telekommunikationsnetzwerk (1) ein Netzwerkmanagementsystem (40) aufweist, wobei das Verfahren ferner folgende Verfahrensschritte umfasst:
-- Übertragen des Fehlerinformationselements an das Netzwerkmanagementsystem (40),
-- Abgleich, durch das Netzwerkmanagementsystem (40), einer Netzwerkstrukturschemainformation mit einer Netzwerkstruktur des Telekommunikationsnetzwerkes (1), wobei der Abgleich insbesondere in Abhängigkeit des Fehlerinformationselements und/oder der Referenzinformation durchgeführt wird, wobei der Abgleich insbesondere in einem In-band Netzwerkmanagementverfahren durchgeführt wird.

7. Verfahren nach einem der vorhergehenden Ansprüche, **dadurch gekennzeichnet, dass** in Abhängigkeit des Fehlerinformationselements Inkonsistenzen zwischen der Netzwerkstrukturschemainformation und der Netzwerkstruktur des Telekommunikationsnetzwerkes (1) erkannt werden und insbesondere in Echtzeit auf die Inkonsistenzen reagiert wird.

8. Telekommunikationsnetzwerk (1) mit einem ersten Netzelement (10) und einem zweiten Netzelement (20), wobei das erste Netzelement (10) einen ersten Port (11) und das zweite Netzelement (20) einen zweiten Port (21) aufweist, wobei der erste Port (11) des ersten Netzelements (10) mit dem zweiten Port (21) des zweiten Netzelements (20) verbunden ist, wobei das Telekommunikationsnetzwerk (1) zum Generieren einer ersten Identifikationsinformation zur Identifikation des ersten Netzelements (10) und einer ersten Netzelementinformation mit Bezug zum ersten Port (11) des ersten Netzelements (10) konfiguriert ist, wobei das Telekommunikationsnetzwerk (1) zum Speichern der ersten Identifikationsinformation und der ersten Netzelementinformation in dem ersten Netzelement (10) konfiguriert ist, wobei das Telekommunikationsnetzwerk (1) zum Generieren einer zweiten Identifikationsinformation zur Identifikation des zweiten Netzelements (20) und einer zweiten Netzelementinformation mit Bezug zum zweiten Port (21) des zweiten Netzelements (20) konfiguriert ist, wobei die zweite Identifikationsinformation derart konfiguriert ist, dass durch Kombination der zweiten Identifikationsinformation mit der zweiten Netzelementinformation eine Referenzinformation derart ableitbar ist, dass die Referenzinformation eine Referenz auf die Konnektivität des zweiten Netzelements (20) zum ersten Netzelement (10) umfasst, wobei das Telekommunikationsnetzwerk (1) zum Speichern der zweiten Identifikationsinformation und der zweiten Netzelementinformation in dem zweiten Netzelement (20).

9. Telekommunikationsnetzwerk (1) nach Anspruch 8, **dadurch gekennzeichnet, dass** das Telekommunikationsnetzwerk (1) derart konfiguriert ist, dass durch das Telekommunikationsnetzwerk (1) ein Prüfungsschritt durchgeführt wird, wenn eine Anfrageinformation bezüglich einer Anfrage einer Internetprotokolladresse für eine Realisierung einer Internetprotokollverbindung an das Telekommunikationsnetzwerk (1) gesendet wird, wobei der Prüfungsschritt eine Prüfung umfasst, ob die mit der Anfrageinformation übertragene Referenzinformation über den durch die Referenzinformation referenzierten ersten Port (11) des ersten Netzelements (10) geführt wurde.

10. Telekommunikationsnetzwerk (1) nach einem der Ansprüche 8 oder 9, **dadurch gekennzeichnet, dass** das Telekommunikationsnetzwerk (1) ein Netzwerkkonfigurationssystem (30) aufweist, wobei das Netzwerkkonfigurationssystem (30) zur Vergabe einer Internetprotokolladresse konfiguriert ist, wobei das Netzwerkkonfigurationssystem (30) derart konfiguriert ist, dass
-- eine Internetprotokolladresse für die Internetprotokollverbindung vergeben wird, wenn die Referenzinformation während der Anfrage der Internetprotokolladresse für die Realisierung der Internetprotokollverbindung über den ersten Port (11) des ersten Netzelements (10) geführt wurde und/oder
-- ein Fehlerinformationselement erzeugt wird, wenn die Referenzinformation und der erste Port (11) des ersten Netzelements (10) zusammenhanglos sind, wobei insbesondere die Internetprotokollverbindung gemäß einer eingeschränkten Konnektivitätsstufe hergestellt wird.

11. Telekommunikationsnetzwerk (1) nach einem der Ansprüche 8 bis 10, **dadurch gekennzeichnet, dass** das Telekommunikationsnetzwerk (1) ein Netzwerkmanagementsystem (40) aufweist, wobei das Netzwerkmanagementsystem (40) zum Empfang des Fehlerinformationselements von dem Netzwerkkonfigurationssystem (30) konfiguriert ist, wobei das Netzwerkmanagementsystem (40) eine Netzwerkstrukturschemainformation bezüglich einer Netzwerkstruktur des Telekommunikationsnetzwerkes (1) aufweist, wobei das Netzwerkmanagementsystem (40) zum Abgleich der Netzwerkstrukturschemainformation mit der Netzwerkstruktur des Telekommunikationsnetzwerkes (1) konfiguriert ist, wobei das Netzwerkmanagementsystem (40) insbesondere zum Abgleich in Abhängigkeit des Fehlerinformationselements und/oder der Referenzinformation konfiguriert ist, wobei das Netzwerkmanagementsystem (40) insbesondere zum Abgleich mittels eines In-band Netzwerkmanagementverfahrens konfiguriert ist.

12. Telekommunikationsnetzwerk (1) nach einem der Ansprüche 8 bis 11, **dadurch gekennzeichnet, dass**
-- der Netzwerkkonfigurationsserver (30) einen Dynamic Host Configuration Protocol (DHCP, DHCPv6) Server oder Point-to-Point Protocol (PPP) Server umfasst und/oder
-- das Netzwerkmanagementsystem ein Betriebsunterstützungssystem (OSS) ist und/oder
-- das erste Netzelement (10) ein Zugangsknoten, Switch oder Router ist und/oder
-- das zweite Netzelement (20) ein Zugangsknoten des Telekommunikationsnetzwerkes (1), ein Switch oder Router ist.

13. Telekommunikationsnetzwerk (1) nach einem der Ansprüche 8 bis 12, **dadurch gekennzeichnet, dass**:
-- die erste Identifikationsinformation ein erster Hostname des ersten Netzelements (10) ist und/oder
-- die erste Netzelementinformation eine erste Portidentifikationsinformation bezüglich eines physikalischen und/oder virtuellen ersten Ports (11, 12, ..., 13) des ersten Netzelements (10) umfasst und/oder
-- die zweite Identifikationsinformation ein zweiter Hostname des zweiten Netzelements (20) ist und/oder
-- die zweite Netzelementinformation eine zweite Portidentifikationsinformation bezüglich eines physikalischen und/oder virtuellen zweiten Ports (21, 22, ..., 23) des zweiten Netzelements (20) umfasst und/oder
-- die Referenzinformation ein logischer oder physikalischer Identifier ist.

14. Computerprogramm mit Programmcodemitteln, mit deren Hilfe alle Schritte eines Verfahrens nach einem der Ansprüche 1 bis 7 durchführbar sind, wenn das Computerprogramm auf wenigstens einer programmierbaren Einrichtung eines Telekommunikationsnetzwerkes (1) ausgeführt wird.

15. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 7 durchführbar sind, wenn das Computerprogramm auf wenigstens einer programmierbaren Einrichtung eines Telekommunikationsnetzwerkes (1) ausgeführt wird.
